# EUROPÄISCHE PATENTSCHRIFT

(11) **EP 1 763 460 B1**
(45) Veröffentlichungstag und Bekanntmachung des Hinweises auf die Patenterteilung: **28.10.2009**
(21) Anmeldenummer: 05707868.5
(22) Anmeldetag: 27.01.2005
(51) Int. Cl.: B60S 1/04

(54) **VORRICHTUNG ZUR BEFESTIGUNG EINER SCHEIBENWISHVORRICHTUNG AN EINEM KRAFTFAHRZEUG**
DEVICE FOR FASTENING A WINDOW WIPING DEVICE TO A MOTOR VEHICLE
DISPOSITF DE FIXATION D'UN ESSUIE-GLACE SUR UN VEHICLE AUTOMOBILE

(30) Priorität: 17.02.2004 DE 102004007517
(43) Veröffentlichungstag der Anmeldung: 21.03.2007
(73) Patentinhaber: ROBERT BOSCH GMBH, 70442 Stuttgart (DE)
(72) Erfinder: KRAUS, Achim, 77815 Buehl (DE); RAPP, Juergen, 77886 Lauf (DE); GHARBI, Sofiene, 70437 Stuttgart (DE); VOLZ, Heiko, 77855 Achern (DE); KOEHN, Swen, 77815 Buehl-Vimbuch (DE)
(86) Internationale Anmeldenummer: PCT/EP2005/050350
(87) Internationale Veröffentlichungsnummer: WO 2005/080157

(56) Entgegenhaltungen:
- EP-A- 1 040 972
- EP-A- 1 291 254
- EP-A- 1 555 176
- WO-A-00/06429
- WO-A-03/039920
- WO-A-03/047926

## Beschreibung

### Stand der Technik

Die Erfindung betrifft eine Scheibenwischvorrichtung für ein Kraftfahrzeug, nach Gattung des unabhängigen Anspruchs. Eine solche Vorrichtung ist aus der WO 03/039920 bekannt.

Es sind schon zahlreiche Scheibenwischvorrichtungen für Kraftfahrzeuge bekannt, die einen Befestigungsabschnitt mit einem gummielastischen Halteelement und ein Befestigungsmittel aufweisen, das zur Befestigung der Scheibenwischvorrichtung am Kraftfahrzeug dient.

Beispielsweise ist aus der DE-A-102 32 877 eine Scheibenwischvorrichtung bekannt, bei der ein einstückig aus Kunststoff gespritztes Wischerlager vorgesehen ist, das einen Befestigungsabschnitt aufweist, der plattenartig ausgebildet ist und in dem ein gummielastisches Halteelement angeordnet ist Zur Befestigung wird hier ein Drehelement aus Kunststoff durch das Halteelement durchgesteckt und durch eine Drehung in einem Karosserieabschnitt des Kraftfahrzeugs fixiert.

Weiterhin ist bekannt, Schrauben oder Nieten durch das gummielastische Halteelement durchzustecken und in einem Karosserieabschnitt des Kraftfahrzeugs festzuschrauben bzw. festzunieten.

Derartige Befestigungsmechanismen sind jedoch aufwändig und kostenintensiv bei der Montage und weisen nicht immer alle geforderten Eigenschaften auf. Insbesondere wird bei modernen Scheibenwischvorrichtungen gefordert, dass diese beim Aufprall eines Fußgängers auf die Scheibenwischvorrichtung des Kraftfahrzeugs zurückweichen und damit ins Innere des Kraftfahrzeugs abtauchen können. Damit wird die Verletzungsgefahr des aufprallenden Fußgängers, insbesondere an den Wischerwellen der Scheibenwischvorrichtung, vermindert

### Vorteile der Erfindung

Die erfindungsgemäße Scheibenwischvorrichtung mit den Merkmalen des Hauptanspruchs hat den Vorteil, dass das Befestigungsmittel kraftschlüssig im Halteelement fixiert ist. Eine derartig ausgebildete Scheibenwischvorrichtung lässt sich in einfachster Weise in das Kraftfahrzeug montieren und ist insbesondere beim Aufprall eines Fußgängers vom Kraftfahrzeug leicht lösbar, so dass das Verletzungsrisiko des Fußgängers erheblich reduziert wird.

Durch die in den Unteransprüchen aufgeführten Maßnahmen ergeben sich vorteilhafte Weiterbildungen und Verbesserungen der im Hauptanspruch angegebenen Merkmale.

Eine besonders gute Befestigung wird dadurch erzielt dass das Befestigungsmittel innerhalb des Halteelementes verschiedene Radien aufweist.

Hierbei ist es besonders vorteilhaft, wenn das Halteelement eine Rille aufweist, in der der Befestigungsabschnitt angeordnet ist, so dass das Halteelement in zwei Seiten gegliedert ist und der größte Radius des Befestigungsmittels innerhalb des Halteelements auf der dem Karosserieabschnitt zugewandten Seite des Halteelements angeordnet ist. Auf diese Weise wird nur wenig Kraft benötigt, um die Scheibenwischvorrichtung im Kraftfahrzeug zu befestigen. Darüber hinaus ist die Scheibenwischvorrichtung im Falle eines Aufpralls eines Fußgängers leicht von der Karosserie des Kraftfahrzeugs lösbar.

Weiterhin ist es als vorteilhaft anzusehen, wenn der größte Radius des Befestigungsmittels innerhalb des Halteelementes auf der dem Karosserieabschnitt abgewandten Seite des Halteelements angeordnet ist, um eine sehr große Auslösekraft und damit eine stabile Halterung der Scheibenwischvorrichtung im Kraftfahrzeug zu gewährleisten.

Hierbei ist es besonders vorteilhaft, wenn das Befestigungsmittel einen ersten Konus mit einer größeren und einer kleineren Grundfläche aufweist und die kleinere Grundfläche in montierter Position dem Karosserieabschnitt zugewandt ist. Bei einem Fußgängeraufprall wird dadurch gewährleistet, dass das Befestigungsmittel zuverlässig aus dem Halteelement herauszugleiten vermag.

Durch einen zweiten Konus mit einer zweiten größeren Grundfläche und einer zweiten kleineren Grundfläche ist ein leichtes Einbauen der Scheibenwischvorrichtung gewährleistet, insbesondere dann, wenn der erste Konus und der zweite Konus an ihren jeweiligen größeren Grundflächen zusammengefügt sind.

Dieser Effekt wird vorteilhafter Weise dadurch verstärkt, dass der zweite Konus höher ist, als der erste Konus.

Weiterhin ist es als vorteilhaft anzusehen, wenn ein Wischerlager vorgesehen ist, in dem zumindest eine Wischerwelle gelagert ist und der Befestigungsabschnitt im Bereich des Wischerlagers angeordnet ist Prallt ein Fußgänger auf die aus der Karosserie des Kraftfahrzeugs herausragenden Wischerwellen auf, so wirkt die Aufprallkraft dadurch direkt auf den Befestigungsabschnitt, so dass ein zuverlässiges Lösen der Scheibenwischvorrichtung gewährleistet ist.

Darüber hinaus ist es von Vorteil, wenn ein Träger für einen Antrieb vorgesehen ist und der Befestigungsabschnitt am Träger angeordnet ist, so dass beim Aufprall eines Fußgängers auf das Karosserieblech im Bereich des Antriebs der Scheibenwischvorrichtung, diese ebenfalls zurückzuweichen vermag. Darüber hinaus ist es auf diese Weise möglich, sämtliche Befestigungspunkte der Scheibenwischvorrichtung erfindungsgemäß vorzusehen.

### Zeichnungen

Ein Ausführungsbeispiel der Erfindung ist in den Zeichnungen dargestellt und in der nachfolgenden Beschreibung näher erläutert. Es zeigen:
- Figur 1: eine erfindungsgemäße Scheibenwischvorrichtung in schematischer Darstellung,
- Figur 2: den Befestigungsabschnitt, das Befestigungsmittel und das Karosserieblech im Detail.

### Beschreibung des Ausführungsbeispiels

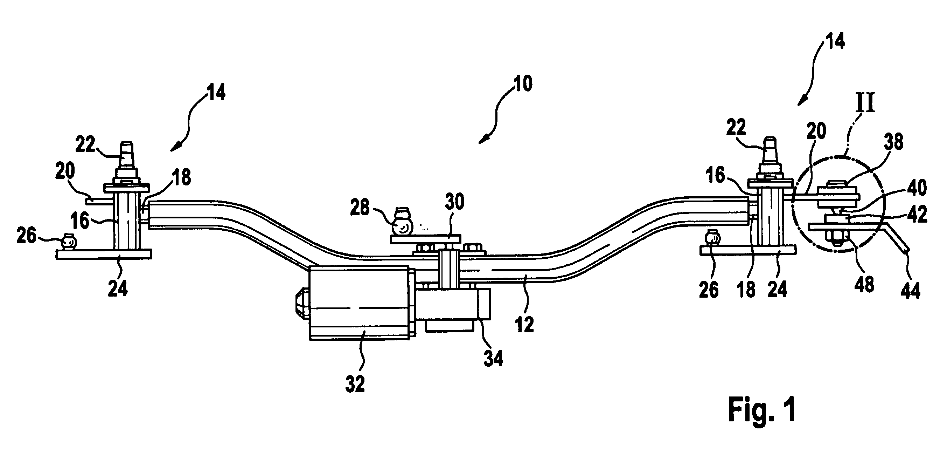

In Figur 1 ist eine erfindungsgemäße Scheibenwischvorrichtung 10 in einer schematischen Darstellung gezeigt.

Diese umfasst im Wesentlichen ein Trägerrohr 12, das eine Längserstreckung mit zwei Enden aufweist, an denen jeweils ein Wischerlager 14 befestigt ist. Im Folgenden wird nur ein Ende, also ein Wischerlager 14 beschrieben, das andere ist mutatis mutandis identisch.

Das Wischerlager 14 umfasst im Wesentlichen ein Formrohr 16, einen Befestigungsstutzen 18 sowie einen Befestigungsabschnitt 20. Im Formrohr 16 ist eine Wischerwelle 22 gelagert, die an einem ihrer Enden mit einer Antriebskurbel 24 drehfest verbunden ist. Der Befestigungsstutzen 20 erstreckt sich vom Formrohr 16 radial nach außen und ist von im Wesentlichen zylinderförmiger Gestalt. Dieser ist in das Trägerrohr 12 eingesteckt und mit diesem vercrimpt.

Auf der dem Befestigungsstutzen 18 gegenüberliegenden Seite des Formrohrs 16 erstreckt sich der Befestigungsabschnitt 20 radial nach außen, der im Wesentlichen plattenförmig ausgebildet ist. Der Befestigungsstutzen 18, das Formrohr 16 und der Befestigungsabschnitt 20 sind einstückig in einem Druck-Guss-Verfahren ausgebildet. Die Antriebskurbel 24 weist an ihrem der Wischerwelle 22 abgewandten Ende ein Kugelgelenk 26 auf, das mit einer hier der Übersichtlichkeit halber nicht gezeichneten Schubstange verbunden ist. Das dem Kugelgelenk 26 abgewandte Ende der Schubstange ist mit einem weiteren Kugelgelenk 28 verbunden, welches am freien Ende einer Abtriebskurbel 30 befestigt ist. Die Abtriebskurbel 30 wird im Betrieb durch einen Antriebsmotor 32 in eine Rotations- oder Hin- und Herbewegung versetzt. Dadurch vollführt die Schubstange ebenso eine Hin- und Herbewegung und überträgt diese auf die Antriebskurbel 24. Dadurch wird die Wischerwelle 22 ebenso in eine rotatorische Hin- und Herbewegung versetzt, so dass die hier nicht gezeichneten Wischerarme eine Pendelbewegung ausführen. Der Antrieb 32 ist durch einen Träger 34 mit dem Trägerrohr 12 verbunden.

Der Befestigungsabschnitt 20 weist an seinem freien Ende eine Öffnung 36 auf, in der ein gummielastisches Halteelement 38 angeordnet ist. In das gummielastische Halteelement 38 ist ein Befestigungsmittel 40 kraftschlüssig eingesteckt, welches an seinem freien Ende eine Befestigungsschraube 42 aufweist, die in einen Karosserieabschnitt 44 des Kraftfahrzeugs eingeschraubt ist. Hierzu weist der Karosserieabschnitt 44 ein Loch 46 auf, an dem eine Schraubenmutter 48 koaxial festgeschweißt ist.

Bei der Montage wird das Befestigungsmittel 40 mit der Befestigungsschraube 42 in den Karosserieabschnitt 44 mit der Schraubenmutter 48 eingeschraubt. Anschließend wird der verbleibende Teil der Scheibenwischvorrichtung 10 mit dem Halteelement 38 auf das Befestigungsmittel 40 aufgesteckt, so dass die Scheibenwischvorrichtung 10 fest mit der Karosserie bzw. mit dem Karosserieabschnitt 48 des Kraftfahrzeugs verbunden ist.

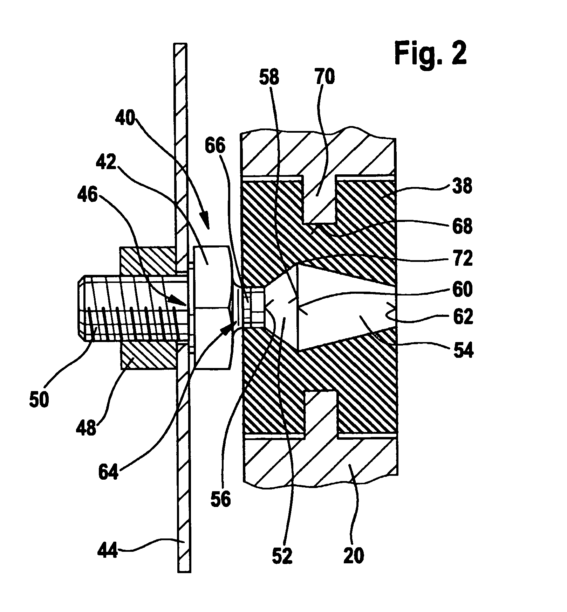

In Figur 2 ist der Befestigungsabschnitt 20 mit dem Halteelement 38 und dem Befestigungsmittel 40 im Detail gezeigt.

Die Befestigungsschraube 42 ist als Sechskant ausgebildet und in den Karosserieabschnitt 44 eingeschraubt. Hierzu weist der Karosserieabschnitt 44 ein Loch 46 auf, in das das Gewinde der Befestigungsschraube 42 eingesteckt ist. Zur Befestigung ist am Karosserieabschnitt 44 die Schraubenmutter 48 festgeschweißt.

Auf der dem Gewinde 50 abgewandten Seite der Befestigungsschraube 42 erstreckt sich in axialer Richtung ein Doppelkonus, der aus einem ersten Konus 52 und einem zweiten Konus 54 besteht. Der erste Konus 52 weist auf der der Befestigungsschraube 42 zugewandten Seite eine kleinere Grundfläche 56 auf und auf der der Befestigungsschraube 42 abgewandten Seite eine größere Grundfläche 58 auf. Der zweite Konus 54 ist hierbei genau umgekehrt angeordnet und weist ebenfalls eine größere Grundfläche 60 sowie eine kleinere Grundfläche 62 auf. Die beiden größeren Grundflächen 58, 60 sind hierbei zusammengefügt und von ihrem Radius identisch. Ebenso sind die beiden kleineren Grundflächen 56, 62 identisch ausgeführt. Der zweite Konus 54 ist hierbei etwa drei mal so hoch, wie der erste Konus 52. Durch die Höhe dieser beiden Konus werden die Winkelvechältnisse des Doppelkonus bestimmt, wodurch die Kräfte zum Einschieben bzw. Herausziehen des Befestigungsmittels 40 aus dem Halteelement 38 bestimmt sind. Zwischen dem Doppelkonus, insbesondere dem ersten Konus 52, und der Befestigungsschraube 42 ist ein kurzer zylindrischer Abschnitt 64 angeordnet, in dem eine umlaufende Nut als Sollbruchstelle 66 vorgesehen ist.

Das Halteelement 38 ist durch eine umlaufende Rille 68 im Wesentlichen in zwei Seiten gegliedert. In der Umlaufenden Rille des gummielastischen Halteelements 38 sitzt der Befestigungsabschnitt 20 als umlaufende Feder 70.

Der Größte Radius des Befestigungsmittels 40 innerhalb des Halteelementes 38 ist hierbei im Bereich der beiden großen Grundflächen 58, 60 der Konus 52, 54. Dieser größte Radius ist auf der Seite des Halteelements 38 angeordnet, die der Befestigungsschraube 42 zugewandt ist.

In einer Variation kann der größte Radius auch auf der der Befestigungsschraube 42 abgewandten Seite des Halteelementes 38 angeordnet sein, je nach dem, ob ein leichtes Aufstecken des Halteelementes auf das Befestigungsmittel 40 oder ein leichtes Abziehen des Haltemittels 38 vom Befestigungselement 40 gewünscht ist.

Beim Aufprall eines Fußgängers auf die Scheibenwischvorrichtung 10 ergeben sich durch das Befestigungsmittel 40 und das Halteelement 38 verschiedene Möglichkeiten des Zurückweichens der Scheibenwischvorrichtung. Wirkt die Kraft in der Ebene des Halteelementes 38, so wird eine Scherkraft auf den zylinderfönnigen Abschnitt 64 des Befestigungsmittels 40 ausgeübt, wodurch dieses sich an der Sollbruchstelle 66 verbiegen oder zerbrechen kann. Dadurch vermag die Scheibenwischvorrichtung 10 der Aufprallkraft zurückzuweichen.

Das Befestigungsmittel 40 vermag auch so angeordnet sein, dass die Kraft beim Aufprall eines Fußgängers auf die Wischerwelle 22 (Figur 1) die Scheibenwischvorrichtung 10 von dem Karosserieabschnitt 44 wegdrückt. In diesem Falle ergäbe sich eine umgedrehte Befestigung, als in Figur 1 gezeigt. Bei einer derartigen Krafteinwirkung vermag dann das Halteelement 38 entgegen der Richtung der Befestigungsschraube 42 vom Befestigungsmittel 40 abgezogen zu werden. Die hierfür notwendige Kraft wird durch die Höhe des ersten Konus 52 sowie durch die Grundfläche 58 des ersten Konus 52 bestimmt.

Eine weitere Größe, die diese Kraft bestimmt, ist der Radius, der zwangsweise an der Führungsstelle 72 entsteht, an welcher die beiden großen Grundflächen 58, 60 der beiden Konus 52, 54 zusammengefügt sind. Ist hierbei eine scharfe Kante, also ein kleiner Radius, vorgesehen, so wird das Halteelement 38 durch eine größere Kraft vom Befestigungsmittel 40 abzuziehen sein, als wenn hier ein großer Radius, also ein im Wesentlichen runder Übergang, vorgesehen ist. Ebenso ist diese Abzugskraft durch das Material, insbesondere durch die Härte des gummielastischen Halteelements 38 bestimmt.

Von der hier vorgeschlagenen Scheibenwischvorrichtung 10 sind natürlich weitere Variationen denkbar, möglich und sinnvoll. Das Befestigungsmittel 40 kann beispielsweise aus Kunststoff oder aus Stahl ausgebildet sein. Ebenso kann das Befestigungsmittel 40 bereits an der Karosserie des Kraftfahrzeuges festgeschweißt sein. In diesem Fall kann dann auf das Loch 46, die Schraubenmutter 48 und das Gewinde 50 verzichtet werden und der zylinderförmige Abschnitt 64 direkt auf den Karosserieabschnitt aufgeschweißt sein. Hierbei kann auch noch ein spezielles Begrenzungselement vorgesehen sein, das den Abstand zwischen dem Halteelement 38 und dem Karosserieabschnitt 44 begrenzt bzw. einen Mindestabstand vorgibt.

In einer weiteren Variation kann der Befestigungsabschnitt, der sich hier vom Formrohr 16 des Wischerlagers 14 aus erstreckt, auch am Träger 34 vorgesehen sein, so dass neben der Befestigung an den beiden Wischerlagern 16 auch ein dritter Befestigungspunkt im Bereich des Antriebs 32 vorgesehen ist, um die Scheibenwischvorrichtung 10 an drei oder mehr Punkten entsprechend zu fixieren.

In einer weiteren Variation ist es denkbar, das Trägerrohr 12, das Wischerlager 14 mit dem Befestigungsabschnitt 20, einstückig auszubilden. Dies kann über ein entsprechend geformtes Trägerrohr 12 oder über ein gegossenes Trägerrohr 12 realisiert sein. In einer weiteren Variation ist es möglich, das Befestigungsmittel 40 zumindest teilweise in seinem Inneren hohl auszubilden und damit das Gewicht der Scheibenwischvorrichtung 10 zu reduzieren.

## Patentansprüche

1. Scheibenwischvorrichtung (10) für ein Kraftfahrzeug, mit einem Befestigungsabschnitt (20), der ein insbesondere gummielastisches Halteelement (38) aufweist, und einem Befestigungsmittel (40) an einem Karosserieabschnitt (44) des Kraftfahrzeugs zur Befestigung der Scheibenwischvorrichtung (10) am Kraftfahrzeug befestigt ist, wobei das Befestigungsmittel (40) kraftschlüssig im Halteelement (38) fixiert ist, **dadurch gekennzeichnet, dass** das Befestigungsmittel (40) einen Doppelkonus (52, 54) aufweist und zwischen einer Befestigungsschraube des Befestigungsmittels (40) und dem Doppelkonus (52, 54) am Befestigungsmittel (40) eine Sollbruchstelle (66) vorgesehen ist, welche als umlaufende Nut in einem zylindrischen Abschnitt des Befestigungsmittels (40) ausgeführt ist.

2. Scheibenwischvorrichtung (10) nach Anspruch 1, **dadurch gekennzeichnet, dass** das Befestigungsmittel (40) innerhalb des Halteelementes (38) verschiedene Radien aufweist.

3. Scheibenwischvorrichtung (10) nach Anspruch 2, **dadurch gekennzeichnet, dass** das Halteelement (38) eine Rille (68) aufweist, die das Halteelement (38) in zwei Seiten gliedert, und in der Rille (68) zumindest teilweise der Befestigungsabschnitt (20) angeordnet ist, wobei der größte Radius des Befestigungsmittels (40) innerhalb des Halteelementes (38) auf der dem Karosserieabschnitt (48) zugewandten Seite des Halteelements (38) angeordnet ist.

4. Scheibenwischvorrichtung (10) nach Anspruch 2, **dadurch gekennzeichnet, dass** das Halteelement (38) eine Rille (68) aufweist, die das Halteelement (38) in zwei Seiten gliedert, und in der Rille (68) zumindest teilweise der Befestigungsabschnitt (20) angeordnet ist, wobei der größte Radius des Befestigungsmittels (40) innerhalb des Halteelementes (38) auf der dem Karosserieabschnitt (44) abgewandten Seite des Halteelements (38) angeordnet ist.

5. Scheibenwischvorrichtung (10) nach einem der Ansprüche 1 bis 4, **dadurch gekennzeichnet, dass** das Befestigungsmittel (40) einen ersten Konus (52) mit einer größeren Grundfläche (58) und einer kleineren Grundfläche (56) aufweist und die kleinere Grundfläche (56) in montierter Position dem Karosserieabschnitt (44) zugewandt ist.

6. Scheibenwischvorrichtung (10) nach Anspruch 5, **dadurch gekennzeichnet, dass** das Befestigungsmittel (40) einen zweiten Konus (54) mit einer zweiten größeren Grundfläche (60) und einer zweiten kleineren Grundfläche (62) aufweist und der erste Konus (52) und der zweite Konus (54) an ihren jeweiligen größeren Grundflächen (58, 60) zusammengefügt sind.

7. Scheibenwischvorrichtung (10) nach Anspruch 6, **dadurch gekennzeichnet, dass** der zweite Konus (54) höher ist, als der erste Konus (52).

8. Scheibenwischvorrichtung (10) nach einem der vorhergehenden Ansprüche, **dadurch gekennzeichnet, dass** ein Wischerlager (14) vorgesehen ist, in dem zumindest eine Wischerwelle (22) gelagert ist, und der Befestigungsabschnitt (20) im bereich des Wischerlagers (14) angeordnet ist.

9. Scheibenwischvorrichtung (10) nach einem der vorhergehenden Ansprüche, **dadurch gekennzeichnet, dass** ein Träger (34) für einen Antrieb (32) vorgesehen ist und der Befestigungsabschnitt (20) am Träger (34) angeordnet ist.

## Claims

1. Window wiping device (10) for a motor vehicle, with a fastening section (20) which has an in particular rubber-elastic holding element (38), and with a fastening means (40) on a body section (44) of the motor vehicle for fastening the window wiping device (10) to the motor vehicle, wherein the fastening means (40) is fixed frictionally in the holding element (38), **characterized in that** the fastening means (40) has a double cone (52, 54), and a predetermined breaking point (66) is provided on the fastening means (40) between a fastening screw of the fastening means (40) and the double cone (52, 54), said predetermined breaking point being designed as an encircling groove in a cylindrical section of the fastening means (40).

2. Window wiping device (10) according to Claim 1, **characterized in that** the fastening means (40) has different radii within the holding element (38).

3. Window wiping device (10) according to Claim 2, **characterized in that** the holding element (38) has a channel (68) which divides the holding element (38) into two sides, and the fastening section (20) is at least partially arranged in the channel (68), the greatest radius of the fastening means (40) within the holding element (38) being arranged on that side of the holding element (38) which faces the body section (44).

4. Window wiping device (10) according to Claim 2, **characterized in that** the holding element (38) has a channel (68) which divides the holding element (38) into two sides, and the fastening section (20) is at least partially arranged in the channel (68), the greatest radius of the fastening means (40) within the holding element (38) being arranged on that side of the holding element (38) which faces away from the body section (44).

5. Window wiping device (10) according to one of Claims 1 to 4, **characterized in that** the fastening means (40) has a first cone (52) with a larger base (58) and a smaller base (56), and the smaller base (56) faces the body section (44) in the fitted position.

6. Window wiping device (10) according to Claim 5, **characterized in that** the fastening means (40) has a second cone (54) with a second larger base (60) and a second smaller base (62), and the first cone (52) and the second cone (54) are joined together at their respective larger bases (58, 60).

7. Window wiping device (10) according to Claim 6, **characterized in that** the second cone (54) is higher than the first cone (52).

8. Window wiping device (10) according to one of the preceding claims, **characterized in that** a wiper bearing (14) is provided in which at least one wiper shaft (22) is mounted, and the fastening section (20) is arranged in the region of the wiper bearing (14).

9. Window wiping device (10) according to one of the preceding claims, **characterized in that** a support (34) for a drive (32) is provided, and the fastening section (20) is arranged on the support (34).

## Revendications

1. Dispositif essuie-glace (10) pour un véhicule automobile, comprenant une portion de fixation (20) qui présente un élément de retenue (38) notamment en caoutchouc élastomère, et un moyen de fixation (40) sur une portion de la carrosserie (44) du véhicule automobile pour la fixation du dispositif essuie-glace (10) sur le véhicule automobile, le moyen de fixation (40) étant fixé par engagement par force dans l'élément de retenue (38), **caractérisé en ce que** le moyen de fixation (40) présente un double cône (52, 54) et **en ce qu'**un point destiné à la rupture (66) est prévu entre une vis de fixation du moyen de fixation (40) et le double cône (52, 54) sur le moyen de fixation (40), lequel point destiné à la rupture (66) est réalisé sous forme de rainure périphérique dans une portion cylindrique du moyen de fixation (40).

2. Dispositif essuie-glace (10) selon la revendication 1, **caractérisé en ce que** le moyen de fixation (40) présente, à l'intérieur de l'élément de retenue (38), différents rayons.

3. Dispositif essuie-glace (10) selon la revendication 2, **caractérisé en ce que** l'élément de retenue (38) présente une gorge (68) qui divise l'élément de retenue (38) en deux côtés, et la portion de fixation (20) est disposée au moins en partie dans la gorge (68), le plus grand rayon du moyen de fixation (40) à l'intérieur de l'élément de retenue (38) étant disposé du côté de l'élément de retenue (38) tourné vers la portion de carrosserie (44).

4. Dispositif essuie-glace (10) selon la revendication 2, **caractérisé en ce que** l'élément de retenue (38) présente une gorge (68) qui divise l'élément de retenue (38) en deux côtés, et la portion de fixation (20) est disposée au moins en partie dans la gorge (68), le plus grand rayon du moyen de fixation (40) à l'intérieur de l'élément de retenue (38) étant disposé du côté de l'élément de retenue (38) tourné à l'opposé de la portion de carrosserie (44).

5. Dispositif essuie-glace (10) selon l'une quelconque des revendications 1 à 4, **caractérisé en ce que** le moyen de fixation (40) présente un premier cône (52) avec une plus grande surface de base (58) et une plus petite surface de base (56) et la plus petite surface de base (56) est tournée dans la position montée vers la portion de carrosserie (44).

6. Dispositif essuie-glace (10) selon la revendication 5, **caractérisé en ce que** le moyen de fixation (40) présente un deuxième cône (54) avec une deuxième surface de base plus grande (60) et une deuxième surface de base plus petite (62) et le premier cône (52) et le deuxième cône (54) sont assemblés au niveau de leurs plus grandes surfaces de base respectives (58, 60).

7. Dispositif essuie-glace (10) selon la revendication 6, **caractérisé en ce que** le deuxième cône (54) est plus haut que le premier cône (52).

8. Dispositif essuie-glace (10) selon l'une quelconque des revendications précédentes, **caractérisé en ce que** l'on prévoit un palier d'essuie-glace (14) dans lequel est monté au moins un arbre d'essuie-glace (22), et la portion de fixation (20) est disposée dans la région du palier d'essuie-glace (14).

9. Dispositif essuie-glace (10) selon l'une quelconque des revendications précédentes, **caractérisé en ce qu'**il est prévu un support (34) pour un entraînement (32), et la portion de fixation (20) est disposée sur le support (34).
